(19) Europäisches Patentamt
European Patent Office
Office européen des brevets

(11) EP 4 257 620 A1

(12) **EUROPEAN PATENT APPLICATION**
published in accordance with Art. 153(4) EPC

(43) Date of publication:
**11.10.2023 Bulletin 2023/41**

(21) Application number: **21903021.0**

(22) Date of filing: **20.10.2021**

(51) International Patent Classification (IPC):
***C08F 290/04*** (2006.01) ***C08F 226/06*** (2006.01)
***C08K 7/08*** (2006.01) ***C08L 39/04*** (2006.01)
***H01B 1/06*** (2006.01) ***H01M 8/10*** (2016.01)
***H01M 8/103*** (2016.01) ***H01M 8/1051*** (2016.01)

(52) Cooperative Patent Classification (CPC):
**C08F 226/06; C08F 290/04; C08K 7/08; C08L 39/04; H01B 1/06; H01M 8/10; H01M 8/103; H01M 8/1051**

(86) International application number:
**PCT/JP2021/038677**

(87) International publication number:
**WO 2022/123917 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2020 JP 2020202525**

(71) Applicants:
- **Nisshinbo Holdings Inc.**
  **Tokyo 103-8650 (JP)**
- **Tokyo Institute of Technology**
  **Tokyo 152-8550 (JP)**

(72) Inventors:
- **MASUDA, Gen**
  **Chiba-city, Chiba 267-0056 (JP)**
- **MATSUMOTO, Hidetoshi**
  **Tokyo 152-8550 (JP)**

(74) Representative: **Mewburn Ellis LLP**
**Aurora Building**
**Counterslip**
**Bristol BS1 6BX (GB)**

(54) **GEL ELECTROLYTE**

(57) This gel electrolyte contains a liquid, inorganic nanofibers, and a polymer obtained by polymerizing a compound which has an imidazolium salt having an alkenyl group represented by formula (1-1) and an imidazolium salt having an alkenyl group represented by formula (2-1) at both ends, and in which the compound is swelled by the liquid; the gel electrolyte exhibits proton conductivity equivalent to that of Nafion at room temperature, exhibits proton conductivity greater than or equal to that of Nafion at high temperatures exceeding 60°C, and has excellent strength.

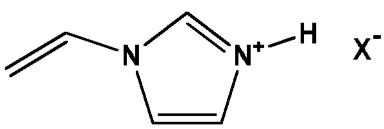

(1-1)

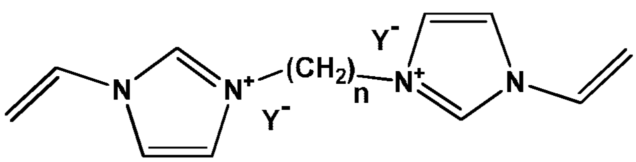

(2-1)

(In the formula, $X^-$ indicates monovalent anions, $Y^-$ represents mutually independent monovalent anions, and n represents an integer 1-20.)

EP 4 257 620 A1

# FIG.2

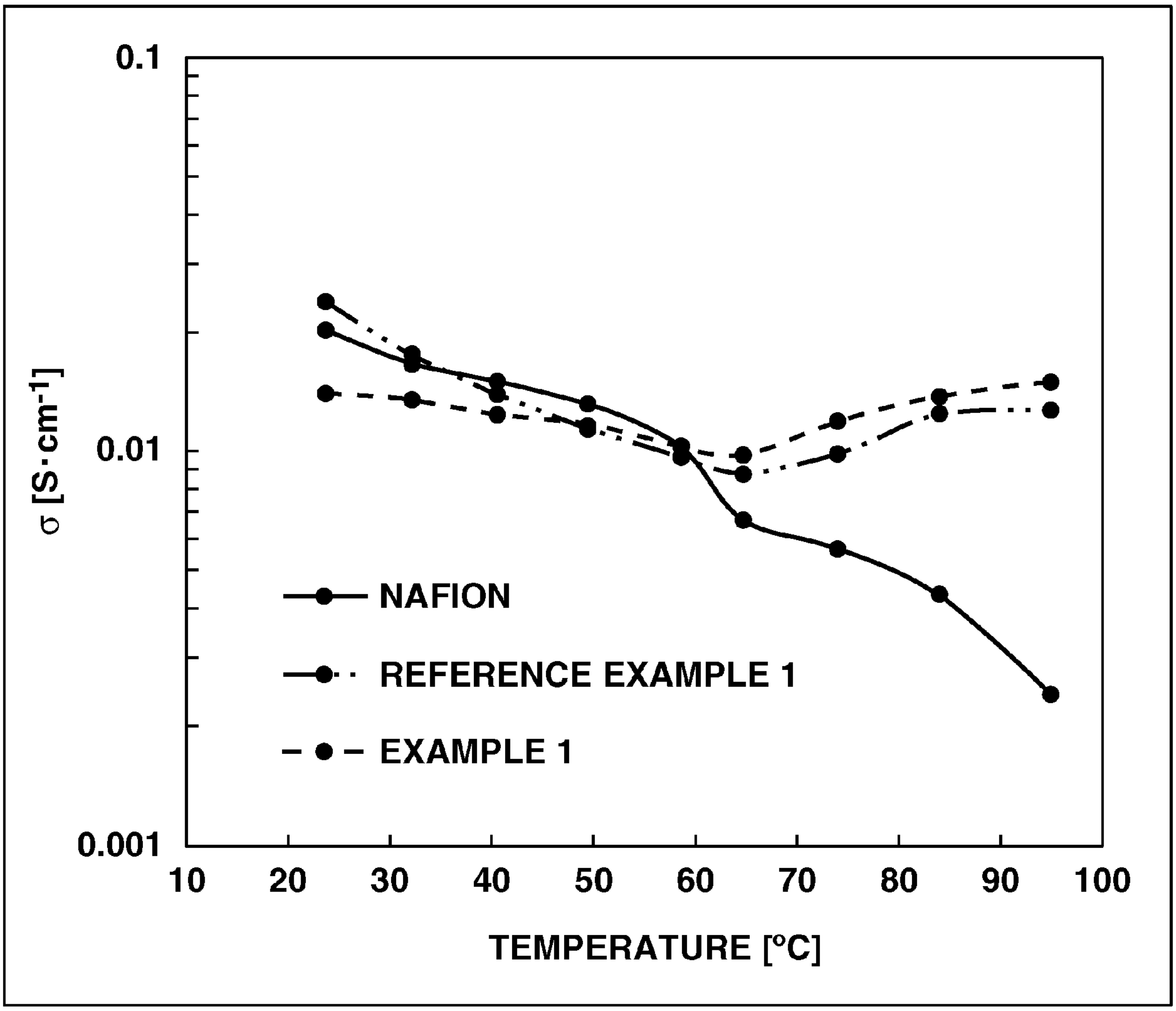

0.1
0.01
0.001
σ [S·cm-1]
10
20
30
40
50
60
70
80
90
100
TEMPERATURE [°C]
NAFION
REFERENCE EXAMPLE 1
EXAMPLE 1

## Description

### TECHNICAL FIELD

The present invention relates to a gel electrolyte, and more specifically, to a gel electrolyte suitable as an electrolyte membrane of a fuel cell.

### BACKGROUND ART

A fuel cell directly generates power by supplying a fuel such as hydrogen and oxygen in the air to a cell and electrochemically reacting them to produce water. The fuel cell enables high energy conversion and has excellent environmental adaptability. Therefore, the fuel cell has been developed for various applications such as small-scale district power generation, home power generation, simple power sources in camping sites and the like, mobile power sources for automobiles and small ships and the like, artificial satellites, and power sources for space development.

Such a fuel cell, in particular, a polymer electrolyte fuel cell, includes a module in which a plurality of unit cells, which is formed by sandwiching between a pair of separators a membrane electrode assembly consisting of a solid polymer electrolyte membrane and an anode electrode and a cathode electrode disposed on both sides of the solid polymer electrolyte membrane, arranged in parallel. Conventionally, Nafion (registered trademark, the same applies hereinafter) which is a fluorine-based polymer is generally and widely used as the electrolyte membrane.

However, this Nafion electrolyte membrane is expensive, and has a problem that proton conductivity is remarkably lowered in a high temperature-non-humidified state.

In addition, in order to realize high proton conductivity in an electrolyte membrane made of a perfluoroalkylsulfone-based polymer such as Nafion, the presence of water (water vapor) is indispensable, and a humidification system is required for the operation of a fuel cell including the electrolyte membrane, which has also a problem that power cannot be generated in a non-humidified state.

In view of these points, in recent years, an electrolyte membrane for fuel cells including a polymer other than a perfluoroalkylsulfone-based polymer has been developed.

For example, Patent Document 1 and Non-Patent Document 1 disclose an electrolyte membrane for fuel cells containing a block copolymer of an A block capable of aggregating with each other at the use temperature of a proton conducting membrane to form a domain and a B block having a proton accepting group such as a nitrogen-containing heterocyclic ring and a proton-donating compound such as sulfuric acid, and specifically disclose a polymer having the following structural formula as the block copolymer.

However, these polymers have a proton accepting group only in one of monomers as raw materials thereof, and those crosslinked by an amide bond or the like are easily hydrolyzed, which have a problem in terms of stability during high-temperature operation and long-term operation.

[Chem. 1]

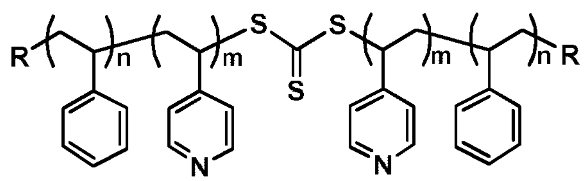

[Chem. 2]

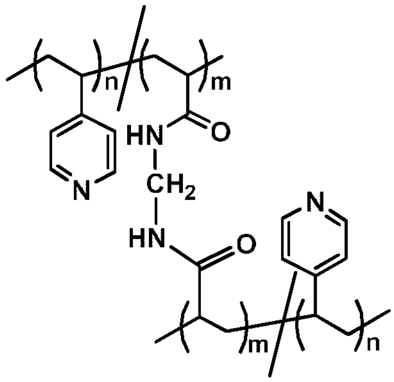

PRIOR ART DOCUMENTS

PATENT DOCUMENTS

Patent Document 1: JP-A 2020-68130

NON-PATENT DOCUMENTS

Non-Patent Document 1: J. Mater. Chem. A, DOI: 10.1039/c9ta01890e, May 3, 2019

SUMMARY OF INVENTION

TECHNICAL PROBLEM

The present invention has been made in view of such circumstances, and an object of the present invention is to provide a gel electrolyte which exhibits proton conductivity equivalent to that of Nafion in a normal temperature range, exhibits proton conductivity equal to or higher than that of Nafion in a high temperature range exceeding 60°C, and has excellent strength.

SOLUTION TO PROBLEM

As a result of intensive studies to achieve the above object, the present inventors have found that a gel containing an inorganic nanofiber and a polymer obtained by polymerizing an imidazolium salt having an alkenyl group with a compound having an imidazolium salt having an alkenyl group at each of both ends, and obtained by swelling the polymer in a liquid can be an electrolyte that can solve the above problem, and have completed the present invention.
That is, the present invention provides:

1. A gel electrolyte comprising a liquid, an inorganic nanofiber, and a polymer obtained by polymerizing an imidazolium salt having an alkenyl group with a compound having an imidazolium salt having an alkenyl group at each of both ends, wherein the polymer is swollen by the liquid;
2. The gel electrolyte according to 1, wherein the inorganic nanofiber is uniformly dispersed in the polymer;
3. The gel electrolyte according to 1 or 2, wherein both the polymer and the inorganic nanofiber have a network structure;
4. The gel electrolyte according to any one of 1 to 3, wherein the polymer is obtained by polymerizing an imidazolium salt having one alkenyl group on a nitrogen atom with a compound having an imidazolium salt having one alkenyl group on a nitrogen atom at each of both ends;
5. The gel electrolyte according to 4, wherein the imidazolium salt having one alkenyl group on a nitrogen atom has the following formula (1):

[Chem. 3]

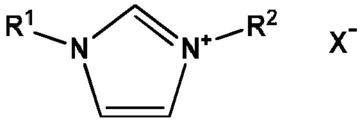

(1)

wherein $R^1$ represents an alkenyl group, $R^2$ represents a hydrogen atom or an alkyl group having 1 to 5 carbon atoms, and $X^-$ represents a monovalent anion;

6. The gel electrolyte according to 5, wherein the imidazolium salt having one alkenyl group on a nitrogen atom has the following formula (1-1):

[Chem. 4]

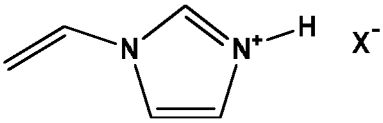

(1-1)

wherein $X^-$ represents a monovalent anion;

7. The gel electrolyte according to 5 or 6, wherein the $X^-$ is $HSO_4^-$;

8. The gel electrolyte according to any one of 4 to 7, wherein the compound having an imidazolium salt having one alkenyl group on a nitrogen atom at each of both ends has the following formula (2):

[Chem. 5]

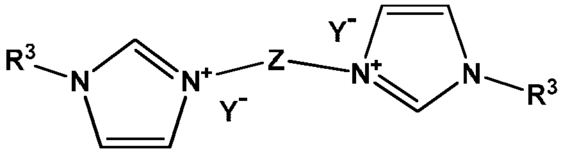

(2)

wherein $R^3$ represents an alkenyl group independently of each other, Z represents a divalent organic group, and $Y^-$ represents a monovalent anion independently of each other;

9. The gel electrolyte according to 8, wherein the compound having an imidazolium salt having one alkenyl group on a nitrogen atom at each of both ends has the following formula (2-1):

[Chem. 6]

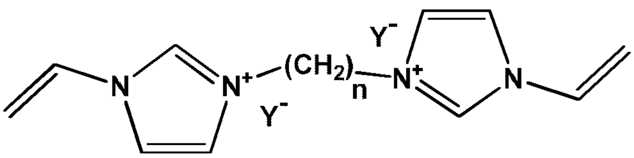

(2-1)

wherein $Y^-$ represents a monovalent anion independently of each other, and n represents an integer of 1 to 20;

10. The gel electrolyte according to 9, wherein n is an integer of 4 to 16;

11. The gel electrolyte according to any one of claims 8 to 10, wherein the $Y^-$ is $HSO_4^-$;

12. The gel electrolyte according to any one of 1 to 11, wherein the inorganic nanofiber is a metal oxide nanofiber;

13. The gel electrolyte according to 12, wherein the metal oxide nanofiber is at least one selected from titania, alumina, silica, zinc oxide, and zirconia nanofibers;

14. The gel electrolyte according to 12 or 13, wherein the metal oxide nanofiber is a silica nanofiber;

15. The gel electrolyte according to any one of 1 to 14, wherein the liquid is at least one selected from water and

sulfuric acid;

16. The gel electrolyte according to any one of 1 to 15, which is used for a fuel cell;
17. A fuel cell comprising the gel electrolyte according to any one of 1 to 16; and
18. An organic-inorganic composite comprising a silica nanofiber, and a polymer of an imidazolium salt having one alkenyl group on a nitrogen atom having the following formula (1-1) with a compound which has an imidazolium salt having one alkenyl group on a nitrogen atom at each of both ends-having the following formula (2-1), wherein the inorganic nanofiber is uniformly dispersed in the polymer.

[Chem. 7]

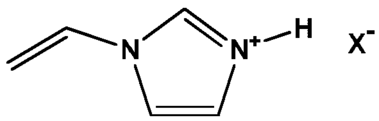

(1-1)

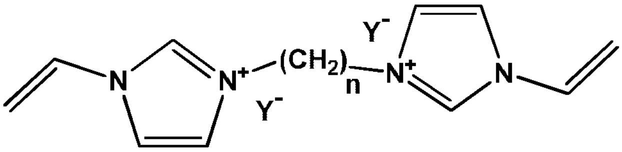

(2-1)

wherein $X^-$ represents a monovalent anion, $Y^-$ represents a monovalent anion independently of each other, and n represents an integer of 1 to 20.

ADVANTAGEOUS EFFECTS OF INVENTION

The polymer constituting the gel electrolyte of the present invention has all of the monomers which are to be raw materials thereof have an imidazolium base which-is a proton-accepting group, and has a large number of proton-accepting groups in the molecule. Therefore, in a non-humidified state, the polymer exhibits proton conductivity equivalent to that of Nafion at normal temperature, and exhibits proton conductivity higher than that of Nafion at a high temperature (in a temperature range exceeding 60°C).

Since the gel electrolyte of the present invention contains the inorganic nanofiber, the gel electrolyte exhibits higher strength physical properties than those of a gel electrolyte free of inorganic nanofiber.

Furthermore, the polymer has a fluorine-free structure, and is also advantageous in terms of cost as compared with a fluorine-based polymer that is generally widely used.

BRIEF DESCRIPTION OF DRAWINGS

[FIG. 1] FIG. 1 illustrates an electron micrograph of a silica nanofiber obtained in Production Example 1.

[FIG. 2] FIG. 2 illustrates-the proton conductivity changes with temperatures of a gel electrolyte membrane prepared in Example 1, a gel electrolyte membrane prepared in Reference Example 1, and a Nafion membrane in a non-humidified state.

[FIG. 3] FIG. 3 illustrates stress-strain curves of gel electrolyte membranes obtained in Example 1 and Reference Example 1.

DESCRIPTION OF EMBODIMENTS

Hereinafter, the present invention is described in more detail.

A gel electrolyte according to the present invention contains a liquid, an inorganic nanofiber, and a polymer obtained by polymerizing an imidazolium salt having an alkenyl group with a compound having an imidazolium salt having an alkenyl group at each of both ends. The polymer is swollen by the liquid.

The alkenyl group in the imidazolium salt and the compound having the imidazolium salt at each of both ends may be linear, branched, or cyclic, and the number of carbon atoms is not limited, but the number of carbon atoms is preferably 2 to 10, and more preferably 2 to 5.

Specific examples of the alkenyl group include ethenyl(vinyl), n-1-propenyl, n-2-propenyl(allyl), n-1-butenyl, n-2-butenyl, n-3-butenyl, n-1-pentenyl, n-2-pentenyl, n-3-pentenyl, n-4-pentenyl, n-5-hexenyl, n-6-heptenyl, n-7-octenyl, n-8-nonenyl, and n-1-decenyl groups.

The substitution position of the alkenyl group in an imidazolium ring is not particularly limited, but a structure having at least an alkenyl group on a nitrogen atom is preferable, and a structure having one alkenyl group on a nitrogen atom is more preferable.

As the imidazolium salt having an alkenyl group, used in the present invention, for example, an imidazolium salt having the following formula (1) is preferable.

[Chem. 8]

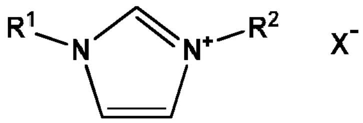

(1)

In the formula (1), $R^1$ represents an alkenyl group, but is preferably an alkenyl group having 2 to 5 carbon atoms, more preferably a vinyl group or an allyl group, and still more preferably a vinyl group.

$R^2$ represents a hydrogen atom or an alkyl group having 1 to 5 carbon atoms.

The alkyl group having 1 to 5 carbon atoms may be linear, branched, or cyclic, and specific examples thereof include methyl, ethyl, n-propyl, i-propyl, n-butyl, sec-butyl, t-butyl, and n-pentyl groups.

Among these, $R^2$ is preferably a hydrogen atom.

Therefore, as the imidazolium salt having an alkenyl group, an imidazolium salt having the following formula (1-1) is more preferable.

[Chem. 9]

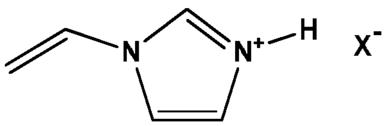

(1-1)

In the above formulas (1) and (1-1), a monovalent anion of $X^-$ is not particularly limited, and examples thereof include $BF_4^-$, $PF_6^-$, $AsF_6^-$, $SbF_6^-$, $AlCl_4^-$, $NbF_6^-$, $HSO_4^-$, $ClO_4^-$, $CH_3SO_4^-$, $CH_3SO_3^-$, p-$CH_3C_6H_4SO_3^-$, $CF_3SO_3^-$, $CF_3CO_2^-$, $(FSO_2)_2N^-$, $(CF_3SO_2)_2N^-$, $(C_2F_5SO_2)_2N^-$, $Cl^-$, $Br^-$, $I^-$, and $OH^-$, but $HSO_4^-$ is preferable in consideration of the electrolyte for a fuel cell.

Meanwhile, as the compound having an imidazolium salt having an alkenyl group at each of both ends, which is used in the present invention, for example, a compound having the following formula (2) is preferable.

[Chem. 10]

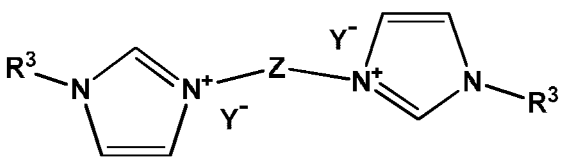

(2)

In the formula (2), specific examples and suitable examples of the alkenyl group of $R^3$ are the same as those exemplified above for $R^1$.

A divalent organic group of Z is not particularly limited, but is preferably a divalent hydrocarbon group having 1 to 20 carbon atoms, and more preferably an alkylene group having 1 to 20 carbon atoms.

Specific examples of the alkylene group having 1 to 20 carbon atoms may be linear, branched, or cyclic. Specific

examples thereof include methylene, ethylene, propylene, trimethylene, tetramethylene, pentamethylene, hexamethylene, heptamethylene, octamethylene, nonamethylene, decamethylene, undecamethylene, and dodecamethylene groups. An alkylene group having 4 to 16 carbon atoms is preferable, and an alkylene group having 6 to 12 carbon atoms is more preferable.

O, S, NH, an amide bond, and an ester bond and the like may be contained in the divalent hydrocarbon group, but from the viewpoint of the stability of a device which the gel electrolyte of the present invention is applied, such as a fuel cell etc., during high temperature operation or long-term operation, it is preferable that these heteroatoms or the bonding groups are not interposed.

Therefore, as the compound having an imidazolium salt having an alkenyl group at each of both ends, a compound having the following formula (2-1) is more preferable.

[Chem. 11]

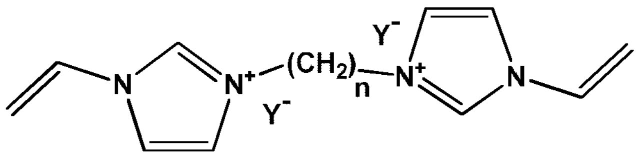

(2-1)

(In the formula, $Y^-$ represents a monovalent anion independently of each other, and n represents an integer of 1 to 20, preferably 4 to 16, and more preferably 6 to 12.)

Specific examples and suitable examples of the monovalent anion of $Y^-$ in the above formulas (2) and (2-1) are the same as those exemplified above for $X^-$, and also in this case, in consideration of the electrolyte application for a fuel cell, both the two $Y^-$ are preferably $HSO_4^-$.

The monomer and the dimer can be produced by a known method.

For example, a monomer in which $R^2$ is a hydrogen atom can be easily obtained by mixing and neutralizing an amine such as vinylimidazole with a protic acid that becomes a desired anion. A monomer in which $R^2$ is an alkyl group having 1 to 5 carbon atoms can be obtained by quaternizing an amine such as vinylimidazole, or after quaternization, salt exchange by mixing with a metal salt of a desired anion or converting into a hydroxide anion by an ion exchange resin, then mixing and neutralized with a protic acid that becomes a desired anion, followed by dehydrating.

Meanwhile, the dimer can be obtained, for example, by mixing a large excess of amine such as vinylimidazole with linear alkyl having a halide at each of both ends, obtaining a salt in which both ends are quaternized, and then performing salt exchange in the same manner as described above.

In the present invention, a polymerization method of an imidazolium salt having an alkenyl group (hereinafter, referred to as a monomer) and a compound having an imidazolium salt having an alkenyl group at each of both ends (hereinafter, referred to as a dimer) may be appropriately selected from conventionally known polymerization methods, and for example, the monomer and the dimer may be reacted by radical polymerization to produce a polymer.

In this case, the use ratio of the monomer and the dimer is optional, but in consideration of further increasing the proton conductivity of the resulting gel electrolyte, monomer : dimer = 1:1 to 10:1 is preferable, 2:1 to 8:1 is more preferable, 2:1 to 6:1 is still more preferable, and 3:1 to 5:1 is yet still more preferable in terms of a mass ratio.

In the polymerization, various known polymerization initiators can also be used.

Specific examples thereof include persulfates such as ammonium persulfate, sodium persulfate, and potassium persulfate; peroxides such as benzoyl peroxide, cumene hydroperoxide, and t-butyl hydroperoxide; and azo-based compounds such as azobisisobutyronitrile, azobismethylbutyronitrile, azobisisovaleronitrile, 2,2'-azobis(isobutyric acid)dimethyl, 2,2'-azobis(N-butyl-2-methylpropionamide), 4,4'-azobis(4-cyanopentanoic acid), 2,2'-azobis(2-amidinopropane)dihydrochloride, and 2,2'-azobis(N,N'-dimethylene isobutyramidine)dihydrochloride. These polymerization initiators can be used alone or in combination of two or more thereof.

The compounding amount of the radical polymerization initiator is usually preferably 0.01 to 50 wt% per the monomer.

A reaction temperature is preferably 60 to 120°C, and more preferably 70 to 100°C.

A reaction time is preferably 30 minutes to 24 hours, and more preferably 1 to 18 hours.

A polymerization reaction can be performed in a solvent.

Examples of the solvent that can be used include water; hydrocarbon-based solvents such as pentane, hexane, cyclohexane, heptane, isooctane, toluene, xylene, and mesitylene; aprotic polar solvents such as acetonitrile, propionitrile, N,N-dimethylformamide, and N-methylpyrrolidone; halogenated hydrocarbon solvents such as dichloromethane, dichloroethane, and chlorobenzene; and ether solvents such as diethyl ether, tetrahydrofuran, dioxane, and dimethoxyethane. These solvents may be used alone or in combination of two or more.

Both the monomer and the dimer used in the present invention are salts, and hydrogen sulfate, which is a particularly suitable salt, has solubility in water, and therefore it is preferable to polymerize the monomer and the dimer using water as a solvent. Therefore, a water-soluble persulfate or an azo-based compound is also preferable as the polymerization initiator.

After the completion of the reaction, the reaction product is cooled to room temperature, and then subjected to known post-treatments such as filtration, washing, and drying, whereby a polymer can be obtained.

The electrolyte of the present invention is a gel electrolyte in which the polymer is swollen by a liquid.

The liquid is not particularly limited, and various solvents conventionally used for an electrolytic solution of an electrochemical device such as a fuel cell can be used.

Specific examples thereof include aqueous solvents such as water and sulfuric acid;
and nonaqueous solvents such as chain ethers (such as dibutyl ether, 1,2-dimethoxyethane, 1,2-ethoxymethoxyethane, methyl diglyme, methyl triglyme, methyl tetraglyme, ethyl glyme, ethyl diglyme, butyl diglyme, ethyl cellosolve, ethyl carbitol, butyl cellosolve, and butyl carbitol); heterocyclic ethers (such as tetrahydrofuran, 2-methyltetrahydrofuran, 1,3-dioxolane, and 4,4-dimethyl-1,3-dioxane); lactones (such as γ-butyrolactone, γ-valerolactone, δ-valerolactone, 3-methyl-1,3-oxazolidine-2-one, and 3-ethyl-1,3-oxazolidine-2-one); amides (such as N-methylformamide, N,N-dimethylformamide, N-methylacetamide, and N-methylpyrrolidinone); chain carbonate esters (such as dimethyl carbonate (DMC), diethyl carbonate (DEC), ethyl methyl carbonate (EMC), and bis(2,2,2-trifluoroethyl)carbonate (TFEC)); cyclic carbonate esters (such as ethylene carbonate (EC), propylene carbonate (PC), butylene carbonate (BC), fluoroethylene carbonate (FEC), vinylene carbonate (VC), and vinylethylene carbonate (VEC)); and imidazolines (such as 1,3-dimethyl-2-imidazolidinone), and nitriles (such as acetonitrile and propionitrile). These solvents can be used alone or in combination of two or more thereof.

Among them, in consideration of the application for a fuel cell, an aqueous solvent is preferable, and at least one selected from water and sulfuric acid is more preferable.

The gel electrolyte of the present invention contains an inorganic nanofiber.

In the present invention, the inorganic material constituting the inorganic nanofiber is not particularly limited, but in consideration of increasing the strength of the obtained gel electrolyte while suppressing the decrease in the proton conductivity of the gel electrolyte, a metal oxide is preferable, at least one selected from titania, alumina, silica, zinc oxide, and zirconia is more preferable, and silica is still more preferable. In the present specification, silicon (Si) is included in metal.

The fiber diameter of the inorganic nanofiber may be in a nano range (less than 1000 nm), but is preferably 1 to 800 nm, and more preferably 10 to 500 nm.

The fiber diameter of the nanofiber is an average value obtained from the analysis of an electron microscopic observation image, and a specific method thereof is as described in Examples described later.

As the inorganic nanofiber used in the present invention, any fibers prepared by various conventionally known methods such as melt blowing, flash spinning, electrospinning (ES), solution blow spinning (SBS), and centrifugal spinning can be used, but fibers prepared by electrospinning (ES) and solution blow spinning (SBS) are preferable.

The electrospinning is a method in which while a charged metal oxide solution or a precursor solution thereof (hereinafter, also referred to as a solution) is drawn in an electric field, the solution is ruptured by the repulsive force of the charge to form an ultrafine fibrous material.

The basic configuration of an ES apparatus is composed of one electrode which also serves as a nozzle for discharging a solution and applies a high voltage of several 1000 to several tens of thousands volts to the solution and the other electrode (counter electrode) facing the electrode. The solution discharged from the one electrode is formed into a nanofiber by bending or stretching of a high-speed jet and a jet following the high-speed jet in an electric field between the two electrodes facing each other, and the nanofiber is deposited on the surface of the other electrode to obtain a nanofiber mat.

In the present invention, a known device can be used as the ES apparatus, and spinning conditions such as the distance between the tip of the nozzle and the counter electrode, the applied voltage, and the flow rate of the solution in the ES apparatus may also be appropriately set according to the raw materials to be used, and the intended fiber diameter and the like.

In the solution blow spinning, a solution sent by a pump through an injection nozzle is stretched by an air flow. Then, a solvent is evaporated to solidify a metal oxide into a fibrous form, and the solidified fiber is collected by a collector made of aluminum or the like to obtain a porous nanofiber sponge.

In the present invention, known devices can be used as members such as a compressor and a syringe pump constituting an SBS apparatus, and the injection rate of the solution and the pressure of a gas and the like may also be appropriately set according to raw materials to be used and intended fiber diameters and the like.

For the purpose of decomposing an organic substance contained in the prepared inorganic nanofiber, for example, baking may be performed at 500 to 1,000°C for about 1 to 12 hours.

A silica nanofiber which is a suitable inorganic nanofiber in the present invention can be produced, for example, by the electrospinning or solution blow spinning described above using a precursor solution prepared by mixing a spinning additive such as polyvinylpyrrolidone (PVP), a silica precursor such as tetraethoxysilane (TEOS), a catalytic acid such as hydrochloric acid, and a solvent such as ethanol or n-propanol.

In this case, since the spinning additive such as PVP usually remains in the obtained nanofiber, it is preferable to perform the above-described baking in order to decompose the spinning additive.

The gel electrolyte of the present invention can be prepared by, in the presence of the inorganic nanofiber, bringing the polymer obtained by the above-described method into contact with the liquid, and swelling the polymer according to a method such as immersion.

It is also possible to disperse or dissolve the above-described monomer, dimer, and polymerization initiator used as necessary in the liquid, and polymerize the monomer and the dimer in the liquid containing the inorganic nanofiber to simultaneously produce and gelling the polymer in which the inorganic nanofiber is dispersed, and preferably uniformly dispersed.

In this case, the solution or dispersion containing the inorganic nanofiber, the monomer, and the dimer is cast on a substrate such as a glass substrate, and then polymerized by heating, whereby a film-like gel electrolyte in which the inorganic nanofiber is dispersed in the polymer, and preferably uniformly dispersed can also be prepared.

The casting method is optional, and for example, various methods such as a scraper, a bar coater, brush coating, spray, immersion, flow coating, roll coating, curtain coating, spin coating, and knife coating can be used.

A heating temperature and a time are the same as those at the time of the polymerization.

The prepared film may be peeled off from the substrate and used.

The dispersion form of the inorganic nanofiber in the polymer is preferably the uniform dispersion form as described above, and a network structure in which fibers having a large aspect ratio in the nanofiber in a uniformly dispersed state forming intersections is more preferable. In this case, both the polymer and the nanofiber form the network structure.

The thickness of the gel electrolyte is not particularly limited, and can be, for example, about 5 to 300 μm, but is preferably 10 to 100 μm.

The gel electrolyte of the present invention can be used as an electrolyte of various electrochemical devices, and is particularly suitable as a polymer electrolyte for a fuel cell.

In general, a solid polymer fuel cell is formed by juxtaposing a large number of unit cells each composed of a pair of electrodes which a solid polymer membrane is sandwiched in between, and a pair of separators in which the electrodes are sandwiched between and forms a gas supply/discharge flow path. The gel electrolyte of the present invention can be used as a part or the whole of the solid polymer membrane.

EXAMPLES

Hereinafter, the present invention is described in more detail with reference to Synthesis Examples, Production Examples, Examples, and Reference Examples, but the present invention is not limited to the following Examples.

[1] Synthesis of raw material monomer

[Synthesis Example 1] Synthesis of N-vinylimidazolium hydrogen sulfate (A)

[Chem. 12]

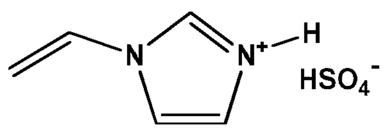

(A)

After 60 ml of ion-exchanged water was sufficiently cooled in an ice bath, 21.7 g of concentrated sulfuric acid (manufactured by Kanto Chemical Co., Inc.) was gradually added thereto under stirring so as not to rapidly generate heat. Subsequently, under ice-cooling stirring, 60 ml of a solution of 20.0 g of 1-vinylimidazole (manufactured by Tokyo Chemical Industry Co., Ltd.) in ion-exchanged water was gradually added dropwise to the resulting aqueous sulfuric acid solution so as not to rapidly generate heat, followed by continuously stirring for several hours. This reaction mixture

was first applied to evaporator and distilled off the most of the ion-exchanged water and then subjected to vacuuming for 5 hours using a vacuum pump. 43.2 g of N-vinylimidazolium hydrogen sulfate (A) as an aimed product was obtained as a white solid slightly containing water (yield: quantitative).

[Synthesis Example 2] Synthesis of 3-vinyl-1-[8-(3-vinylimidazolidine-1-ium-1-yl)octyl]-imidazolium bisulfate (B)

[Chem. 13]

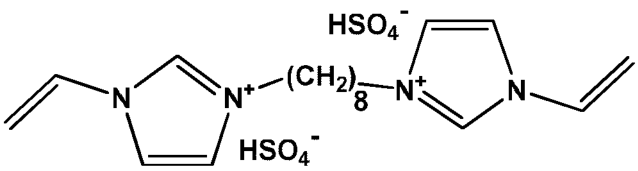

(B)

To a solution of 32.2 g of 1,8-dibromooctane (manufactured by Tokyo Chemical Industry Co., Ltd.) in 400 ml of acetonitrile (manufactured by Sanyo kaseihin Co., Ltd.), 49.0 g of 1-vinylimidazole (manufactured by Tokyo Chemical Industry Co., Ltd.) was added, followed by stirring at room temperature for more than 2 weeks. The precipitated crystals were filtered under reduced pressure using a Kiriyama funnel, and the solvent was removed by vacuum pumping to obtain 49.0 g of 3-vinyl-1-[8-(3-vinylimidazolidine-1-ium-1-yl)octyl]-imidazolium dibromide as an intermediate as a white solid (yield: 90%).

3.87 g of the obtained dibromo compound was dissolved in 20 ml of ion-exchanged water, and the solution was subjected to column treatment using 30 ml of an ion-exchanged resin DS-2 (manufactured by Organo Corporation). An eluted material containing the reactant was subjected to similar column treatment several more times to completely convert bromide ions into hydroxide ions. The finally obtained 700 g of an eluted material containing reactant was cooled, and concentrated sulfuric acid (manufactured by Kanto Chemical Co., Inc.) was added until a neutralization point was reached. The amount of concentrated sulfuric acid used was 1.57 g. The reaction solution was placed in an evaporator to distill off water, and dehydrated using a vacuum pump. To the obtained jelly-like solid, 20 ml of a 1:1 (volume ratio) mixed solution of ion-exchanged water and methanol was added, followed by stirring for several hours. Then, an insoluble matter was removed by filtration using a membrane filter, and a filtrate was placed in an evaporator to remove the solvent. Furthermore, the obtained solid was subjected to vacuum-pumping to obtain 2.60 g of 3-vinyl-1-[8-(3-vinylimidazolidine-1-ium-1-yl)octyl]imidazolium bisulfate (B) as an aimed product as a pale brown solid (yield: 62%).

[2] Production of silica nanofiber

[Production Example 1]

283.1 mg of PVP (manufactured by Sigma-Aldrich Co. LLC, Mw = 1,300,000) which is a spinning additive, 576 mL of tetraethoxysilane (manufactured by FUJIFILM Wako Pure Chemical Corporation), and 6.62 mL of n-propanol (manufactured by FUJIFILM Wako Pure Chemical Corporation) were mixed and stirred overnight.

To this solution, a solution obtained by mixing 61.7 μL of 35 wt% hydrochloric acid (manufactured by Kanto Chemical Co., Inc.), 8.0 μL of water, and 1.74 mL of n-propanol was added dropwise, followed by stirring for 60 minutes to prepare a precursor solution.

The obtained precursor solution was electrospun using an electrospinning device (ES 2000S, manufactured by Fuence Co., Ltd.) under the conditions of an applied voltage of 20 kV, a distance between a spinning nozzle and a collector of 15 cm, and a solution supply amount of 0.24 mL/h, and collected on an aluminum sheet as a collector.

Subsequently, the obtained nanofiber was peeled off, and baked at 600°C for 5 hours in the air to obtain a desired silica nanofiber (average fiber diameter: 70 nm).

The fiber diameter of the nanofiber was determined as an average value of 100 points in the measurement sample of a secondary electron image obtained by a scanning electron microscope (JCM-5700, manufactured by JEOL Ltd.) using the length measuring function of image analysis software (ImageJ, manufactured by National Institutes of Health, US). The electron micrograph of the obtained silica nanofiber is illustrated in FIG. 1.

[3] Production of gel electrolyte membrane

[Example 1]

20 mg of the silica nanofiber obtained in Production Example 1 was added to 0.5 mL of 0.2 mol/L sulfuric acid (manufactured by Kanto Chemical Co., Inc.), followed by ultrasonic treatment for 30 minutes to prepare a dispersion.

Meanwhile, a solution was prepared, in which 0.4 g of the N-vinylimidazolium hydrogen sulfate (A) obtained in Synthesis Example 1 was dissolved in 0.4 mL of deionized water, and the 3-vinyl-1-[8- (3-vinylimidazolidine-1-ium-1-yl)octyl]imidazolium hydrogen sulfate (B) (mass ratio (A):(B) = 5:1) obtained in Synthesis Example 2 and potassium persulfate (manufactured by Sigma-Aldrich Co. LLC. 1 wt% per N-vinylimidazolium hydrogen sulfate (A)) as an initiator were added.

The silica nanofiber dispersion prepared above was added to a solution containing the imidazolium salts little by little, followed by defoaming using a test tube mixer (TTM-1, manufactured by Shibata Scientific Technology Ltd.). The defoamed solution was then developed on a glass slide, and cast with a scraper made of Teflon (registered trademark). The cast slide glass was placed in a glove box filled with an argon gas, polymerized at 80°C for 12 hours, and taken out from the glove box after the polymerization to prepare a polymer membrane in which the polymer absorbed moisture in the air (swollen by water).

The obtained polymer membrane was peeled off from the slide glass to obtain a gel electrolyte membrane having a thickness of about 60 μm.

[Reference Example 1]

The N-vinyl imidazolium hydrogen sulfate (A) obtained in Synthesis Example 1, the 3-vinyl-1[8-(3-vinyl imidazolidine-1-ium-1-yl)octyl]imidazolium hydrogen sulfate (B) (mass ratio (A):(B) = 5:1) obtained in Synthesis Example 2, and potassium persulfate (manufactured by Sigma-Aldrich Co. LLC. 1 wt% per N-vinylimidazolium hydrogen sulfate (A)) as an initiator were dissolved in deionized water, and the solution was stirred at room temperature for 2 hours. After stirring, the solution was filtered twice with absorbent cotton, and defoamed using a test tube mixer (TTM-1, manufactured by Shibata Scientific Technology Ltd.). The defoamed solution was then developed on a glass slide, and cast with a scraper made of Teflon (registered trademark). The cast slide glass was placed in a glove box filled with an argon gas, polymerized at 80°C for 12 hours, and taken out from the glove box after the polymerization to prepare a polymer membrane which has absorbed moisture in the air.

The obtained polymer membrane was peeled off from the slide glass to obtain a gel electrolyte membrane having a thickness of about 60 μm.

[4] Measurement of proton conductivity

The proton conductivity of each of the gel electrolyte membrane obtained in Example 1, the gel electrolyte membrane obtained in Reference Example 1, and a commercially available Nafion membrane (manufactured by DuPont) was measured by the following method. The results are shown in FIG. 2.

[Proton conductivity]

As an electrochemical impedance (EIS) measuring device, a Solartron 1255B frequency response analyzer and a Solartron SI 1287 potentiostat manufactured by Solartron were used, and measurement was performed in an adopted constant potential mode in a frequency range of 100 mHz to 100 kHz.

Specifically, a sample membrane (the gel electrolyte membrane of Example 1, the gel electrolyte membrane of Reference Example 1, or the Nafion membrane) was sandwiched between stainless steel electrodes using an HS flat cell (manufactured by Hohsen Corporation), and resistance in a thickness direction was measured at 20 to 95°C under the condition of without external humidification. The sample membrane of which data was recorded was stabilized for 1 hour before measurement under each test condition. Both the real and imaginary components of impedance were measured, and the proton conductivity was measured based on the following formula, assuming that a real z-axis intercept provided membrane resistance.

$$\sigma = l/SR$$

(In the formula, $\sigma$ is proton conductivity expressed by $S \cdot cm^{-1}$, 1 is the thickness of the membrane (cm), S is an active area ($cm^2$), and R is membrane resistance ($\Omega$) obtained from EIS analysis.)

As illustrated in FIG. 2, it is found that the gel electrolyte membranes prepared in Example 1 and Reference Example 1 exhibit proton conductivity equivalent to that of the Nafion membrane in a normal temperature range, and exhibit proton conductivity equal to or higher than that of the Nafion membrane in a high temperature range of 60 to 95°C. In particular, it is found that the gel electrolyte membrane containing a silica nanofiber prepared in Example 1 exhibits the highest proton conductivity over 60°C.

The reason why the proton conductivity of the non-humidified Nafion membrane decreases at 60°C or higher is that water confined in the membrane is dehydrated with an increase in temperature, and the proton conduction mainly depends on a vehicle mechanism. Meanwhile, since the reduction rate of the proton conductivity of the gel electrolyte membranes prepared in Example 1 and Reference Example 1 is small, it is found that the proton conduction through PIL does not depend much on the water medium.

[5] Measurement of mechanical strength of gel electrolyte membrane

The stress-strain curves of the gel electrolyte membranes obtained in Example 1 and Reference Example 1 were measured using a universal testing machine (STA-1150, manufactured by A & D Co., Ltd.). The size of the sample used for the measurement was 30 mm × 10 mm. Each sample was strained at a rate of 3 mm/min at room temperature. A Young's modulus was evaluated from the stress-strain curve, and tensile strength was evaluated as a stress value at the maximum value of the curve. The stress-strain curve is shown in FIG. 3, and the Young's modulus, the tensile strength and the elongation at break are shown in Table 1.

[Table 1]

| | Young's modulus (MPa) | Tensile strength (MPa) | Elongation at break (%) |
|---|---|---|---|
| Example 1 | 37 | 4.0 | 11 |
| Reference Example 1 | 12 | 2.0 | 17 |

As shown in Table 1 and FIG. 3, it is found that the gel electrolyte prepared in Example 1 has more excellent mechanical strength than that of the gel electrolyte of Reference Example 1.

The Young's modulus and the tensile strength are significantly increased after the addition of the silica nanofiber, presumably because the silica nanofiber act as a temporary crosslinking agent between polymer chains, resulting in a localized region with enhanced strength.

## Claims

1. A gel electrolyte comprising a liquid, an inorganic nanofiber, and a polymer obtained by polymerizing an imidazolium salt having an alkenyl group with a compound having an imidazolium salt having an alkenyl group at each of both ends, wherein the polymer is swollen by the liquid.

2. The gel electrolyte according to claim 1, wherein the inorganic nanofiber is uniformly dispersed in the polymer.

3. The gel electrolyte according to claim 1 or 2, wherein both the polymer and the inorganic nanofiber have a network structure.

4. The gel electrolyte according to any one of claims 1 to 3, wherein the polymer is obtained by polymerizing an imidazolium salt having one alkenyl group on a nitrogen atom with a compound having an imidazolium salt having one alkenyl group on a nitrogen atom at each of both ends.

5. The gel electrolyte according to claim 4, wherein the imidazolium salt having one alkenyl group on a nitrogen atom has the following formula (1):

[Chem. 1]

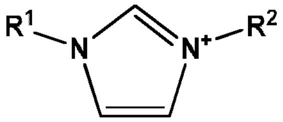 $X^-$ (1)

wherein $R^1$ represents an alkenyl group, $R^2$ represents a hydrogen atom or an alkyl group having 1 to 5 carbon atoms, and $X^-$ represents a monovalent anion.

**6.** The gel electrolyte according to claim 5, wherein the imidazolium salt having one alkenyl group on a nitrogen atom has the following formula (1-1):

[Chem. 2]

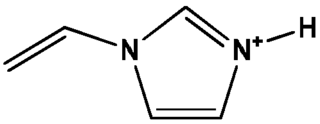 $X^-$ (1-1)

wherein $X^-$ represents a monovalent anion.

**7.** The gel electrolyte according to claim 5 or 6, wherein the $X^-$ is $HSO_4^-$.

**8.** The gel electrolyte according to any one of claims 4 to 7, wherein the compound having an imidazolium salt having one alkenyl group on a nitrogen atom at each of both ends has the following formula (2):

[Chem. 3]

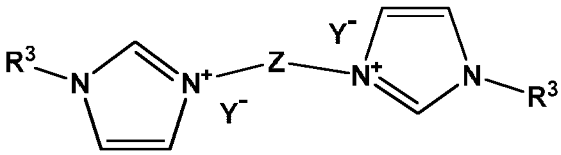 (2)

wherein $R^3$ represents an alkenyl group independently of each other, Z represents a divalent organic group, and $Y^-$ represents a monovalent anion independently of each other.

**9.** The gel electrolyte according to claim 8, wherein the compound having an imidazolium salt having one alkenyl group on a nitrogen atom at each of both ends has the following formula (2-1):

[Chem. 4]

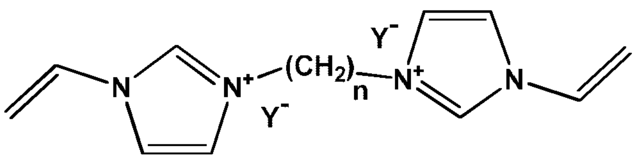 (2-1)

wherein $Y^-$ represents a monovalent anion independently of each other, and n represents an integer of 1 to 20.

**10.** The gel electrolyte according to claim 9, wherein n is an integer of 4 to 16.

**11.** The gel electrolyte according to any one of claims 8 to 10, wherein the $Y^-$ is $HSO_4^-$.

**12.** The gel electrolyte according to any one of claims 1 to 11, wherein the inorganic nanofiber is a metal oxide nanofiber.

**13.** The gel electrolyte according to claim 12, wherein the metal oxide nanofiber is at least one selected from titania, alumina, silica, zinc oxide, and zirconia nanofibers.

**14.** The gel electrolyte according to claim 12 or 13, wherein the metal oxide nanofiber is a silica nanofiber.

**15.** The gel electrolyte according to any one of claims 1 to 14, wherein the liquid is at least one selected from water and sulfuric acid.

**16.** The gel electrolyte according to any one of claims 1 to 15, which is used for a fuel cell.

**17.** A fuel cell comprising the gel electrolyte according to any one of claims 1 to 16.

**18.** An organic-inorganic composite comprising a silica nanofiber, and a polymer of an imidazolium salt having one alkenyl group on a nitrogen atom having the following formula (1-1) with a compound which has an imidazolium salt having one alkenyl group on a nitrogen atom at each of both ends having the following formula (2-1),
wherein the inorganic nanofiber is uniformly dispersed in the polymer.

[Chem. 5]

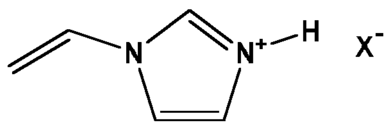

(1-1)

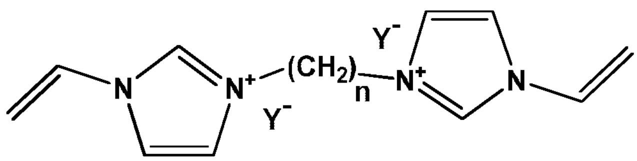

(2-1)

wherein $X^-$ represents a monovalent anion, $Y^-$ represents a monovalent anion independently of each other, and n represents an integer of 1 to 20.

# FIG.1

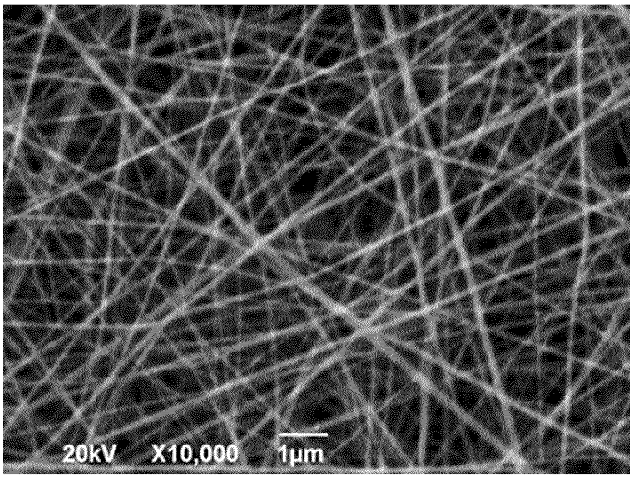
20kV X10,000 1μm

# FIG.2

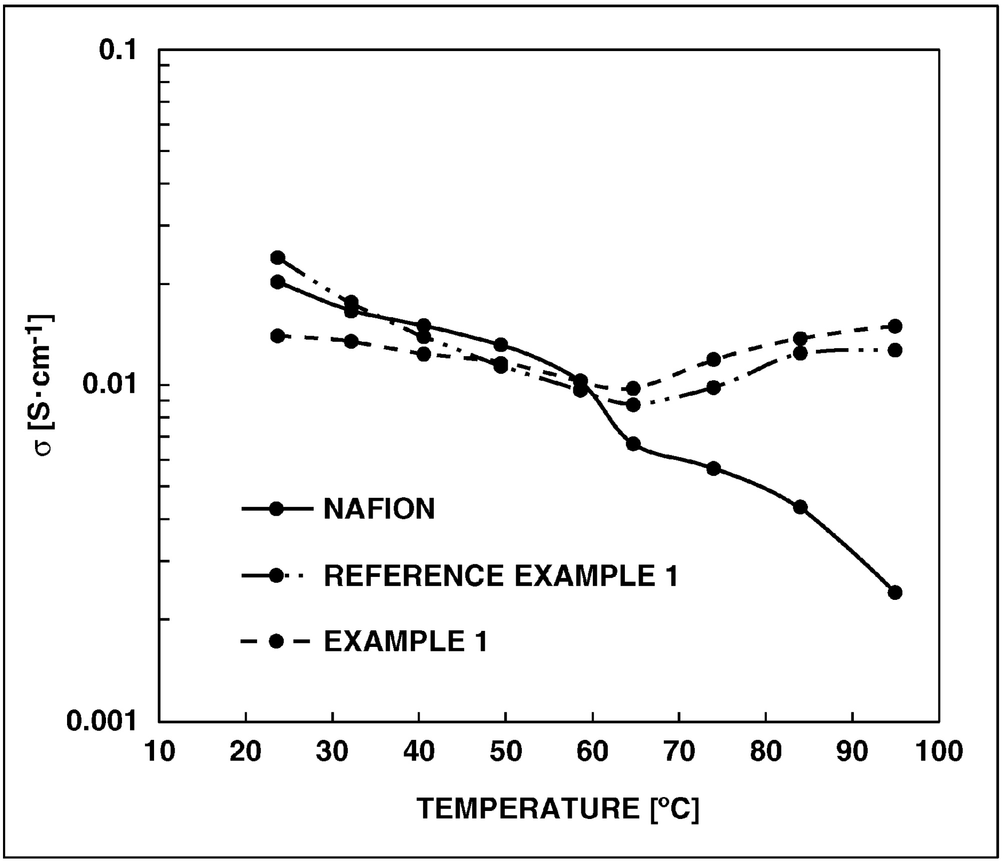
0.1
0.01
0.001
σ [S·cm-1]
10 20 30 40 50 60 70 80 90 100
TEMPERATURE [°C]
NAFION
REFERENCE EXAMPLE 1
EXAMPLE 1

# FIG.3

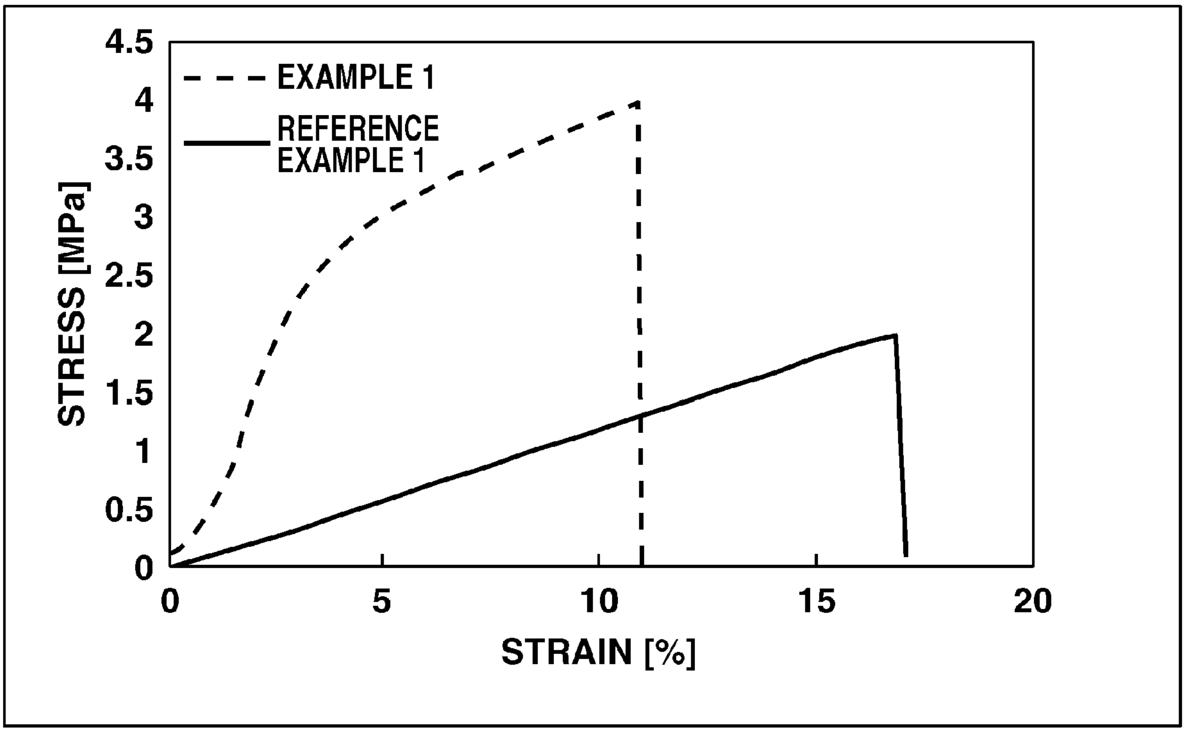
4.5
4
3.5
3
2.5
2
1.5
1
0.5
0
STRESS [MPa]
EXAMPLE 1
REFERENCE
EXAMPLE 1
0
5
10
15
20
STRAIN [%]

**INTERNATIONAL SEARCH REPORT**

International application No.
**PCT/JP2021/038677**

**A. CLASSIFICATION OF SUBJECT MATTER**

***C08F 290/04***(2006.01)i; ***C08F 226/06***(2006.01)i; ***C08K 7/08***(2006.01)i; ***C08L 39/04***(2006.01)i; ***H01B 1/06***(2006.01)i; ***H01M 8/10***(2016.01)i; ***H01M 8/103***(2016.01)i; ***H01M 8/1051***(2016.01)i
FI: C08L39/04; C08F226/06; C08F290/04; C08K7/08; H01B1/06 A; H01M8/10 101; H01M8/103; H01M8/1051

According to International Patent Classification (IPC) or to both national classification and IPC

**B. FIELDS SEARCHED**

Minimum documentation searched (classification system followed by classification symbols)

C08F290/04; C08F226/06; C08K7/08; C08L39/04; H01B1/06; H01M8/10; H01M8/103; H01M8/1051

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | CN 106876758 A (CHANGZHOU UNIVERSITY) 20 June 2017 (2017-06-20) claims, examples 1-7 | 1-18 |
| Y | CHEN et al. Poly(ionic liquid) prepared by photopolymerization of ionic liquid monomers as quasi-solid-state electrolytes for dye-sensitized solar cells. Reactive and Functional Polymers. November 2016, vol. 108, pp. 103-112 in particular, abstract, scheme 2, 2.3. polymerization process, 2.5. assembly of DSSCs | 1-6, 8-10, 12-14, 18 |
| Y | CN 101635200 A (SUZHOU UNIVERSITY) 27 January 2010 (2010-01-27) claims, examples 1-23 | 1-6, 8-10, 12-14, 18 |
| Y | JP 6-111827 A (TANAKA KIKINZOKU KOGYO KK) 22 April 1994 (1994-04-22) claims, examples | 1-18 |
| Y | JP 2004-47450 A (NIPPON SHEET GLASS CO LTD) 12 February 2004 (2004-02-12) claims, paragraphs [0031], [0049] | 1-18 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 December 2021** | **21 December 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2021/038677**

| Patent document cited in search report | Publication date (day/month/year) | Patent family member(s) | Publication date (day/month/year) |
|---|---|---|---|
| CN 106876758 A | 20 June 2017 | (Family: none) | |
| CN 101635200 A | 27 January 2010 | (Family: none) | |
| JP 6-111827 A | 22 April 1994 | US 5523181 A<br>claims, examples | |
| JP 2004-47450 A | 12 February 2004 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020068130 A


### Non-patent literature cited in the description


- *J. Mater. Chem. A,* 03 May 2019